# EUROPÄISCHE PATENTSCHRIFT

(11) **EP 2 927 729 B1**
(45) Veröffentlichungstag und Bekanntmachung des Hinweises auf die Patenterteilung: **31.05.2017**
(21) Anmeldenummer: 15000945.4
(22) Anmeldetag: 01.04.2015
(51) Int. Cl.: G06T 7/00, G06T 19/00, G02B 27/01

(54) **TESTVORRICHTUNG FÜR SICHTSYSTEME**
TEST DEVICE FOR VISION SYSTEMS
DISPOSITIF DE TEST POUR SYSTÈMES DE VISION

(30) Priorität: 05.04.2014 DE 102014005030
(43) Veröffentlichungstag der Anmeldung: 07.10.2015
(73) Patentinhaber: Airbus Defence and Space GmbH, 81663 Ottobrunn (DE)
(72) Erfinder: Ermann, Emanuel, 85077 Oberstimm (DE); Werner, Daniel, 85238 Petershausen (DE); Krebs, Oliver, 86706 Weichering (DE); Schad, Marco, 85293 Steinkirchen (DE); Caspari, Ralf, 85092 Kösching (DE)
(74) Vertreter: Lorenz & Kopf PartG mbB Patentanwälte, LKGLOBAL

(56) Entgegenhaltungen:
- WO-A1-2009/065370
- US-A- 5 572 203
- US-A- 5 731 902

## Beschreibung

### Technisches Gebiet

Die vorliegende Erfindung betrifft eine Testvorrichtung für Sichtsysteme, insbesondere für sichtfeldergänzende Sichtsysteme, sowie die Verwendung einer solchen Testvorrichtung zum Testen von sichtfeldergänzenden Sichtsystemen (sog. augmented visual systems).

### Hintergrund der Erfindung

Sichtfeldergänzende Sichtsysteme werden üblicherweise eingesetzt, um in das Sichtfeld eines menschlichen Betrachters zusätzliche Informationen einzublenden, welche beispielsweise die in dem Sichtfeld befindlichen Objekte betreffen. Zu diesen Objekten können beispielsweise Informationen wie Position, Geschwindigkeit, Bewegungsrichtung, oder andere Informationen eingeblendet werden.

Sichtfeldergänzende Sichtsysteme weisen eine lichtdurchlässige Einheit, welche allgemein als Sichteinheit bezeichnet werden kann, auf, welche sich in Blickrichtung vor den Augen eines menschlichen Betrachters oder Bedieners befindet, so dass der Betrachter das sich ihm bietende Sichtfeld durch die lichtdurchlässige Einheit betrachtet. Befinden sich irgendwelche Objekte in dem Sichtfeld des Betrachters, können zu diesen Objekten die oben genannten ergänzenden Informationen auf der lichtdurchlässigen Einheit wie auf einem Display oder einer Projektionsfläche dargestellt werden. Eine Sichteinheit kann auch ausgeführt sein, Informationen auf die Netzhaut eines Bedieners oder Betrachters zu projizieren bzw. abzubilden.

Solche Sichtsysteme können so ausgestaltet sein, dass zumindest die Sichteinheit ein tragbares System ist und mit einer Steuereinheit des Sichtsystems so gekoppelt ist, dass ein Datenaustausch zwischen der Sichteinheit und der Steuereinheit des Sichtsystems erfolgen kann, um die von der Steuereinheit gelieferten Informationen auf der Sichteinheit darstellen zu können.

Die Steuereinheit ist ausgeführt, die Ausrichtung der Sichteinheit im Raum zu erfassen und die dieser Ausrichtung entsprechenden Informationen an die Sichteinheit zu liefern. In anderen Worten: hat ein Betrachter die Sichteinheit vor seinen Augen angeordnet und mit seinem Kopf gekoppelt und dreht oder neigt der Betrachter den Kopf, so ändert sich die relative Position der in dem Sichtfeld des Betrachters befindlichen Objekte mit Bezug zu der Sichteinheit. Somit kann es vorkommen, dass neue Objekte durch die Sichteinheit zu sehen sind und/oder die bereits im Sichtfeld befindlichen Objekte von den Augen des Betrachters an anderer Stelle durch die Sichteinheit gesehen werden. Damit ändern sich der Inhalt der sichtfeldergänzenden Informationen und auch deren Position. Es kann beispielsweise gewünscht sein, dass die zu einem Objekt dargestellten Informationen neben einem Objekt positioniert werden und Bewegungen des Objekts auf der Sichteinheit folgen.

Die Steuereinheit erhält dazu Positionsinformationen, welche die Sichteinheit betreffen, d.h. beispielsweise die Blickrichtung mit Bezug zu drei Raumachsen und den Öffnungswinkel der Sichteinheit, welcher das Blickfeld definiert.

Bei solchen sichtfeldergänzenden Sichtsystemen kann es sich beispielsweise um einen Aufsatz für den Kopf eines Betrachters handeln, insbesondere in Form eines Helms, dessen Visier als Sichteinheit ausgeführt ist. Es kann sich bei einem sichtfeldergänzenden Sichtsystem auch um einen Aufsatz in Form einer Brille handeln.

Ein Sichtsystem kann auch mit einem Fahrzeug (Luftfahrzeug, Landfahrzeug, oder Wasserfahrzeug) gekoppelt sein, und beispielsweise in Form einer Scheibe (Front-, Heck-, oder Seitenscheibe) ausgeführt sein. Dabei kann auch die Position des Betrachters relativ zu diesem Sichtsystem erfasst werden, um die auf der Sichteinheit darzustellenden Informationen und deren Position zu ermitteln.

Das Testen eines sichtfeldergänzenden Sichtsystems kann einen hohen Aufwand mit sich bringen. Die Position und Ausrichtung der Sichteinheit ist für verschiedene Verwendungen und Anwendungen zu verändern und das dargestellte Bild muss mit dem erwarteten Bild abgeglichen werden. Das dargestellte bzw. erwartete Bild können allgemein als dargestelltes bzw. erwartetes Sichtfeld bezeichnet werden, welches sich aus den realen Objekten, die sich vor den Augen des Betrachters befinden, und den auf der Sichteinheit dargestellten Informationen, also virtuellen Objekten bzw. Informationen, zusammensetzt.

US 5,731,902 beschreibt eine Testvorrichtung zum Testen von kombinierten Sichtsystemen. Dabei werden zwei Kameras gemäß der erwarteten Augenposition eines menschlichen Betrachters angeordnet mit Bezug zu einer Anzeigevorrichtung bewegt, um den auf der Anzeigevorrichtung dargestellten Inhalt aus variierenden Blickrichtungen zu erfassen.

WO 2009/065370 A1 beschreibt eine Vorrichtung, welche zum Projizieren von Inhalten auf eine Windschutzscheibe in einem Fahrzeug ausgeführt ist.

US 5,572,203 beschreibt eine Testvorrichtung zum Ermitteln und Überprüfen der Position eines virtuellen Bildes in einem Sichtfeld. Des weiteren offenbart FR 2895083 eine Positioniereinrichtung für einen zu testenden Helm Zusammenfassung der Erfindung Es kann als Aufgabe der Erfindung betrachtet werden, den Aufwand zum Testen von Sichtsystemen, insbesondere von sichtfeldergänzenden Sichtsystemen, zu reduzieren.

Gemäß einem Aspekt ist eine Testvorrichtung zum Testen von Sichtsystemen angegeben. Die Testvorrichtung weist eine bewegliche Haltevorrichtung, eine Positionserfassungseinheit und eine Testdurchführungseinheit auf. Die bewegliche Haltevorrichtung ist ausgeführt zum Halten einer Sichteinheit des Sichtsystems und ist ausgeführt, eine Bewegung der Sichteinheit mit einem rotatorischen Freiheitsgrad vorzunehmen. Die Positionserfassungseinheit ist ausgeführt zum Erfassen der Position und der Ausrichtung der Sichteinheit. Die Testdurchführungseinheit ist mit der Positionserfassungseinheit so gekoppelt, dass eine erfasste Position und Ausrichtung der Sichteinheit an die Testdurchführungseinheit übertragen werden kann, wobei die Testdurchführungseinheit weiterhin ausgeführt ist, ein Sichtfeld in Abhängigkeit der erfassten Position und Ausrichtung der Sichteinheit zu ermitteln und wobei die Testdurchführungseinheit weiterhin ausgeführt ist, ein tatsächlich von der Sichteinheit dargestelltes Sichtfeld einzulesen und das ermittelte Sichtfeld mit dem eingelesenen Sichtfeld zu vergleichen.

Die bewegliche Haltevorrichtung kann beispielsweise von der Testdurchführungseinheit gesteuert werden und kann dabei eine vorgegebene Reihenfolge von Bewegungen bzw. Positionierungen der Sichteinheit vornehmen. In anderen Worten kann die Testdurchführungseinheit ausgeführt sein, die Haltevorrichtung so zu steuern, dass die Sichteinheit vorgegebenen Bewegungsmustern folgt. In Abhängigkeit dieser Bewegungsmuster variiert das Sichtfeld, d.h. die auf der Sichteinheit dargestellten Informationen und die Position dieser Informationen. Das Sichtfeld kann insbesondere Daten, beispielsweise in Form von alphanumerischen Zeichen, beinhalten, die auf einer Anzeigeeinheit der Sichteinheit dargestellt werden. Bei Sichteinheiten, welche Informationen auf die Netzhaut des Bedieners abbilden oder projizieren kann es sich bei dem Sichtfeld um die abgebildeten bzw. projizierten Daten bzw. Informationen handeln.

Im Zusammenhang mit dieser Beschreibung ist unter dem Begriff Position der Sichteinheit grundsätzlich die Anordnung der Sichteinheit im Raum zu verstehen, was die räumliche Position der Sichteinheit als solches und die vorgesehene Blickrichtung beinhaltet, also beispielsweise eine Richtung senkrecht zu einer Ebene der Sichteinheit.

Die Testdurchführungseinheit ist ausgeführt, durch Übertragung von Steuerinformationen an die Haltevorrichtung die Haltevorrichtung zu positionieren und somit eine Sollposition der Sichteinheit vorzugeben. Die Sollposition der Sichteinheit wird anschließend an die Steuereinheit des Sichtsystems übertragen und das auf dieser Sollposition basierende Sichtfeld von der Steuereinheit ermittelt. Bei diesem ermittelten Sichtfeld handelt es sich um das Soll-Sichtfeld, basierend auf der vorgegebenen Sollposition der Haltevorrichtung und der Sichteinheit.

Die Positionsermittlungseinheit ermittelt die Position und die Ausrichtung der Sichteinheit und überträgt diese an die Steuereinheit, so dass die Steuereinheit basierend auf den Informationen der Positionsermittlungseinheit Sichtfelddaten an die Sichteinheit übermittelt.

Die Testdurchführungseinheit ist ausgeführt, die von der Steuereinheit an die Sichteinheit übertragenen Sichtfelddaten einzulesen. Bei dem eingelesenen Sichtfeld handelt es sich um das Ist-Sichtfeld.

Sowohl das Soll-Sichtfeld als auch das Ist-Sichtfeld können sich insbesondere durch die auf der Sichteinheit darzustellenden Daten bzw. Informationen sowie deren Position auf der Sichteinheit kennzeichnen, so dass ein Sichtfeldabgleich beispielsweise einen Abgleich der darzustellenden Daten bzw. Informationen sowie deren Position beinhaltet.

Durch einen Abgleich des ermittelten Sichtfelds mit dem eingelesenen Sichtfeld kann die Testdurchführungseinheit ermitteln, ob die Steuereinheit des Sichtsystems das korrekte Sichtfeld, d.h. das in Abhängigkeit der Position und Ausrichtung der Sichteinheit erwartete Sichtfeld, an die Sichteinheit überträgt.

Vor dem Durchführen eines solchen Tests sind die Positionskoordination der Haltevorrichtung und die von der Positionserfassungseinheit ermittelten Positionskoordinaten der Sichteinheit aneinander anzugleichen. Dies kann beispielsweise erfolgen, indem die Sichteinheit mechanisch mit der Haltevorrichtung gekoppelt wird, insbesondere reversibel und starr mit der Haltevorrichtung gekoppelt wird. Im Falle einer Sichteinheit in Form eines Kopfaufsatzes für einen Betrachter entspricht diese Kopplung dem Aufsetzen des Aufsatzes auf den Kopf. Das Angleichen der Position der Haltevorrichtung an die Position der Sichteinheit führt dazu, dass in dieser Ausgangsposition das Soll-Sichtfeld dem Ist-Sichtfeld entspricht.

Die Haltevorrichtung ist beweglich und ist so ausgeführt, dass ihre Position und Ausrichtung von der Testdurchführungseinheit vorgegeben werden kann. Dazu kann die Haltevorrichtung so bewegt werden, dass die Bewegung einen rotatorischen Freiheitsgrad aufweist, d.h. dass die Haltevorrichtung eine Drehbewegung um eine Rotationsachse ausführen kann.

Eine solche Drehbewegung der Haltevorrichtung entspricht der Änderung der Ausrichtung der Sichteinheit. Im Zusammenhang mit der Verwendung durch einen Betrachter entspricht dies dem Neigen oder Drehen des Kopfes, so dass sich zumindest die Blickrichtung und die Ausrichtung der Sichteinheit ändern.

Die Positionserfassungseinheit ist ausgeführt, die Position und die Ausrichtung der Sichteinheit zu erfassen. Die Positionserfassungseinheit kann einen oder mehrere Sensoren aufweisen. Zumindest ein Sensor kann dabei mechanisch mit der Sichteinheit gekoppelt sein, d.h. integral mit der Sichteinheit ausgeführt sein, so dass dieser zumindest eine Sensor eine Bewegung oder Anordnung der Sichteinheit erfassen kann. Weiterhin kann zumindest ein Sensor räumlich getrennt (d.h. ohne unmittelbare Verbindung in Form einer mechanischen Kopplung, über welche eine translatorische oder rotatorische Bewegung der Sichteinheit unmittelbar auf diesen Sensor übertragen wird) von der Sichteinheit angeordnet sein und beispielsweise über optische Erfassungsmittel die Position und die Anordnung der Sichteinheit erfassen. In einer Ausführungsform können alle Sensoren der Positionserfassungseinheit mit der Sichteinheit mechanisch gekoppelt sein. In einer anderen Ausführungsform können alle Sensoren der Positionserfassungseinheit räumlich getrennt von der Sichteinheit sein.

Damit liegen zwei funktionale Verbindungen vor: (a) Testdurchführungseinheit mit Haltevorrichtung und (b) Positionserfassungseinheit mit Sichteinheit. Die Haltevorrichtung wiederum ist mechanisch mit der Sichteinheit gekoppelt und eine Bewegung der Haltevorrichtung verändert die Position und Ausrichtung der Sichteinheit. Die Verbindung (a) bestimmt das ermittelte Sichtfeld, wie oben beschrieben, während Verbindung (b) das auf der Sichteinheit dargestellte und von der Testdurchführungseinheit eingelesene Sichtfeld bestimmt.

Das Testen der Sichteinheit bzw. des Sichtsystems erfolgt damit in einem geschlossenen Testkreislauf (sog. closed loop testing) mit vier Komponenten, wie in den Verbindungen (a) und (b) bezeichnet.

Die Testvorrichtung ermöglicht damit eine reproduzierbare und präzise Positionierung der Sichteinheit des Sichtsystems.

Ein Bewegungsmuster kann mehrfach getestet werden, die Testergebnisse sind damit reproduzierbar, da die Haltevorrichtung ein Bewegungsmuster mit hoher Genauigkeit mehrfach darstellen kann. Damit werden das Auffinden von Abweichungen zwischen ermitteltem und eingelesenem Sichtfeld sowie das Identifizieren der Ursachen dieser Abweichungen vereinfacht.

Der Ablauf eines Testlaufs kann im Vorhinein festgelegt werden und automatisch ablaufen, indem die Testdurchführungseinheit die Haltevorrichtung ansteuert, ein vorgegebenes Bewegungsmuster einmalig oder mehrmalig abzufahren und einen laufenden Abgleich des ermittelten Sichtfelds mit dem eingelesenen Sichtfeld vorzunehmen und die Ergebnisse dieses Abgleichs zur späteren Auswertung zu protokollieren.

Das Ermitteln und Einlesen des entsprechenden Sichtfeldes kann unter Einhaltung einer Echtzeitbedingung erfolgen, also innerhalb einer vorbestimmten Zeitspanne.

Bei dem vorgegebenen Bewegungsmuster kann es sich um nachgestellte menschliche Kopfbewegungen handeln. Eine entsprechende Bewegung der Sichteinheit und des jeweiligen durch die Sichteinheit dargestellten Sichtfeldes wird kontinuierlich erfasst und an die Testdurchführungseinheit zur Laufzeit der Testvorrichtung übertragen.

Die Positionserfassungseinheit kann ausgeführt sein, die Position der Sichteinheit laufend unter Einhaltung einer vorbestimmten Zeitbedingung zu erfassen.

Gemäß einer Ausführungsform ist die Testdurchführungseinheit ausgeführt, mit einer Steuereinheit des Sichtsystems gekoppelt zu werden und ein von der Steuereinheit an die Sichteinheit übermitteltes Sichtfeld einzulesen, so dass das von der Testdurchführungseinheit eingelesene Sichtfeld dem von der Steuereinheit an die Sichteinheit übermittelten Sichtfeld entspricht.

Diese funktionale Verknüpfung entspricht der oben genannten Verbindung (b).

Gemäß einer weiteren Ausführungsform ist die Testdurchführungseinheit ausgeführt, eine von der Positionserfassungseinheit erfasste Position der Sichteinheit zyklisch abzufragen.

Insbesondere kann dieses zyklische Abfragen unter Einhaltung einer vorbestimmten Zeitbedingung erfolgen und so eine laufende Bereitstellung von Positionsinformationen der Sichteinheit bereitstellen.

Gemäß einer weiteren Ausführungsform ist die Testdurchführungseinheit ausgeführt, das ermittelte Sichtfeld nach jedem Abfragen der erfassten Position erneut zu bestimmen und das von der Steuereinheit übermittelte Sichtfeld erneut einzulesen und das ermittelte Sichtfeld mit dem eingelesenen Sichtfeld nach jedem Abfragen der erfassten Position abzugleichen.

Gemäß einer weiteren Ausführungsform ist die Haltevorrichtung ausgeführt, eine Bewegung der Sichteinheit mit drei rotatorischen Freiheitsgraden vorzunehmen.

Die Sichteinheit kann damit so bewegt werden, als würde jeweils eine Rotation um drei voneinander unabhängige Rotationsachsen der Sichteinheit erfolgen. Dabei führt die Haltevorrichtung nicht zwingend eine Rotationsbewegung aus, sondern sorgt dafür, dass zumindest die Sichteinheit eine Rotationsbewegung ausführt.

Die Haltevorrichtung kann insbesondere so ausgeführt sein, dass sie jeweils eine Rotationsbewegung der Sichteinheit um drei aufeinander senkrecht stehende Rotationsachsen ausführen kann. Bei diesen drei Rotationsachsen kann es sich um die drei Koordinatenachsen eines dreidimensionalen kartesischen Koordinatensystems handeln.

Gemäß einer weiteren Ausführungsform ist die Haltevorrichtung als steuerbarer Roboterarm ausgeführt.

Durch einen Roboterarm wird eine gute Reproduzierbarkeit eines Bewegungsmusters ermöglicht, da ein Roboterarm ein vorgegebenes Bewegungsmuster mit hoher Genauigkeit wiederholt ausführen kann. Damit kann insbesondere ein Langzeittest oder Dauertest vorteilhaft ausgeführt werden.

Gemäß einer weiteren Ausführungsform weist der Roboterarm sechs getrennt voneinander ansteuerbare Segmente auf und ermöglicht eine Positionierung der Sichteinheit entlang von drei translatorischen und drei rotatorischen Freiheitsgraden.

Bei einer translatorischen Positionierung oder Bewegung handelt es sich um eine Bewegung entlang einer oder mehreren Achsen, wobei es sich bei diesen Achsen insbesondere um die drei Rotationsachsen handeln kann. Bei der translatorischen Bewegung kann eine freie translatorische Bewegung im Raum erfolgen.

Gemäß einer weiteren Ausführungsform ist die Haltevorrichtung ausgeführt, die Sichteinheit nur rotatorisch zu bewegen. In dieser Ausführungsform kann ein für den Test erforderlichen Platz gering gehalten werden, da auf translatorische Bewegungen der Haltevorrichtung und der Sichteinheit verzichtet wird.

Gemäß einer weiteren Ausführungsform weist die Positionserfassungseinheit zumindest einen Sensor auf aus der Gruppe bestehend aus optischen Sensoren, Beschleunigungssensoren, Lagesensoren, Dehnungssensoren.

Die optischen Sensoren können die Position und/oder Ausrichtung der Sichteinheit unmittelbar durch Erfassen der Sichteinheit ermitteln oder mittelbar durch Erfassen der Position von Markierungselementen, welche an der Sichteinheit angeordnet sind.

Beschleunigungssensoren können Lageänderung in einer vorgegebenen Bewegungsrichtung erfassen. Die Positionserfassungseinheit kann mehrere Beschleunigungssensoren aufweisen, von denen zumindest einer jeweils ausgeführt ist, eine Bewegung in eine vorgegebene Bewegungsrichtung zu erfassen. Mit drei Beschleunigungssensoren kann damit die Komponente einer Bewegung im Raum in Richtung aller drei Raumachsen erfolgen.

Lagesensoren und Dehnungssensoren können die absolute Lage der Sichteinheit, wie z.B. die Neigung mit Bezug zu einer Ausgangsposition, erfassen. Dabei können auch von diesen Sensoren mehrere vorgesehen sein, so dass jede Raumachse von zumindest einem Sensor erfasst wird.

Gemäß einer weiteren Ausführungsform weist die Positionserfassungseinheit zwei optische Sensoren jeweils in Form einer Bildaufnahmeeinheit auf.

Bei der Bildaufnahmeeinheit kann es sich um eine Kamera, beispielsweise um eine Hochgeschwindigkeitskamera, handeln, welche mehrere Bildaufnahmen der Sichteinheit pro Sekunde ermöglicht.

Die Bildaufnahmeeinheiten sind voneinander beabstandet angeordnet, so dass die Sichteinheit aus zwei verschiedenen Perspektiven erfasst wird um eine Bestimmung der räumlichen Position der Sichteinheit zu ermöglichen.

Gemäß einem weiteren Aspekt ist die Verwendung einer Testvorrichtung wie oben und im Folgenden beschrieben zum Testen von sichtfeldergänzenden Sichtsystemen angegeben.

Die Testvorrichtung wie oben und im Folgenden beschrieben führt ein Verfahren wie folgt aus: Ansteuern der Haltevorrichtung durch die Testdurchführungseinheit, so dass die Haltevorrichtung eine Bewegung ausführt, welche bei der Sichteinheit eine Rotationsbewegung um mindestens eine Rotationsachse hervorruft; Erfassen einer Position der Sichteinheit und Erfassen einer räumlichen Ausrichtung der Sichteinheit jeweils durch die Positionserfassungseinheit; Ermitteln eines Sichtfeldes der Sichteinheit basierend auf der erfassten Position und Ausrichtung; Darstellen eines Sichtfeldes in der Sichteinheit und Einlesen des in der Sichteinheit dargestellten Sichtfeldes; Abgleichen des eingelesenen Sichtfeldes mit dem ermittelten Sichtfeldes durch die Testdurchführungseinheit.

Dieses Verfahren kann zyklisch durchgeführt werden und ist insbesondere für Langzeittests von Sichteinheiten, insbesondere sichtfeldergänzenden Sichteinheiten, geeignet.

Zum Testen der Sichteinheit kann diese auf ein reales Szenario gerichtet werden, so dass ein menschlicher Betrachter durch die Sichteinheit das real vorhandene Szenario betrachten könnte. Die Objekte in dem real vorhandenen Szenario können mit ergänzenden Informationen versehen werden. Alternativ kann die Sichteinheit auf ein virtuelles Szenario gerichtet werden, beispielsweise auf ein Display, auf welchem ein zweidimensionales oder dreidimensionales Szenario dargestellt ist, welches ein statisches oder ein dynamisches Szenario sein kann, d.h. in welchem sich die Objekte nicht bewegen bzw. bewegen.

Nachfolgend wird anhand der beigefügten Zeichnungen näher auf Ausführungsbeispiele der Erfindung eingegangen. Es zeigen:
- Fig. 1: eine schematische Darstellung einer Testvorrichtung gemäß einem Ausführungsbeispiel.
- Fig. 2: eine schematische Darstellung eines Teils einer Testvorrichtung gemäß einem weiteren Ausführungsbeispiel.

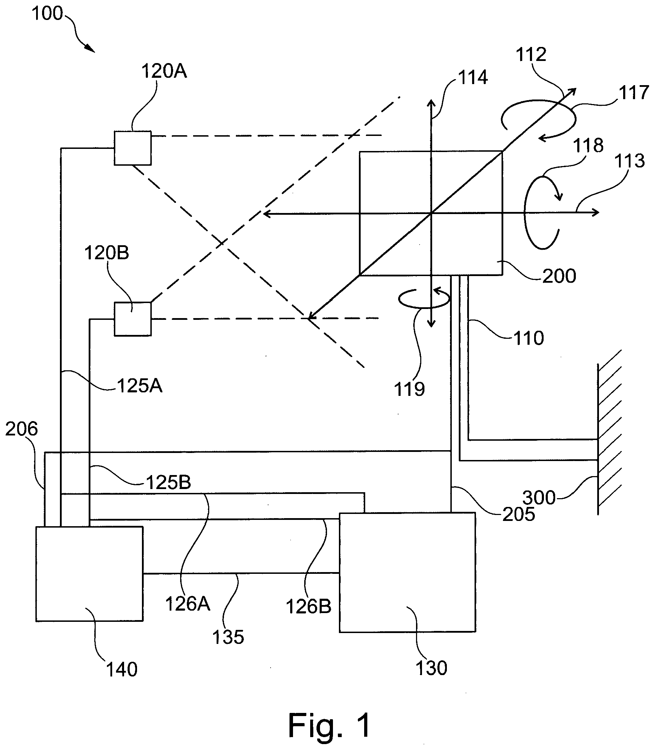

Fig. 1 zeigt eine Testvorrichtung 100 mit einer Haltevorrichtung 110, zwei optischen Sensoren 120A, 120B, und einer Testdurchführungseinheit 140.

Die Testvorrichtung 100 ist mit einem Sichtsystem aufweisend eine Steuereinheit 130 und eine Sichteinheit 200 gekoppelt, um das Sichtsystem zu testen.

Die Haltevorrichtung 110 ist an einem Montageelement 300 (beispielsweise eine Wand oder ein Rahmen eines Gehäuses, in welchem die Haltevorrichtung 110 und die Sichteinheit 200 angeordnet sind) mechanisch gekoppelt. Die Haltevorrichtung 110 ist so beweglich, dass die Sichteinheit 200, welche an der Haltevorrichtung befestigt ist, Bewegungen mit drei rotatorischen Freiheitsgraden ausführen kann, wie von den Rotationspfeilen 117, 118, 119 jeweils um die Rotationsachsen 112, 113, 114 angedeutet.

Die Positionserfassungseinheit mit den optischen Sensoren 120A, 120B erfasst die Position und Ausrichtung bzw. Blickrichtung der Sichteinheit 200 und überträgt die entsprechenden Informationen an die Testdurchführungseinheit 140 bzw. an die Steuereinheit 130 über die Leitungen 125A, 125B bzw. 126A, 126B. Jeder der optischen Sensoren hat ein Erfassungsfeld, welches durch die gestrichelten Linien dargestellt ist und innerhalb dessen die Position und Ausrichtung der Sichteinheit erfasst werden kann.

Die Steuereinheit 130 ermittelt basierend auf den Informationen von der Positionserfassungseinheit den Inhalt des Sichtfelds und überträgt diesen an die Sichteinheit über die Leitung 205. Dieser Inhalt des Sichtfelds wird auch von der Testdurchführungseinheit 140 eingelesen, und zwar über die Leitung 206. Hierbei handelt es sich um das Ist-Sichtfeld.

Unabhängig hiervon ermittelt die Testdurchführungseinheit 140 basierend auf den Informationen von der Positionserfassungseinheit ein Soll-Sichtfeld und gleicht dieses mit dem Ist-Sichtfeld ab.

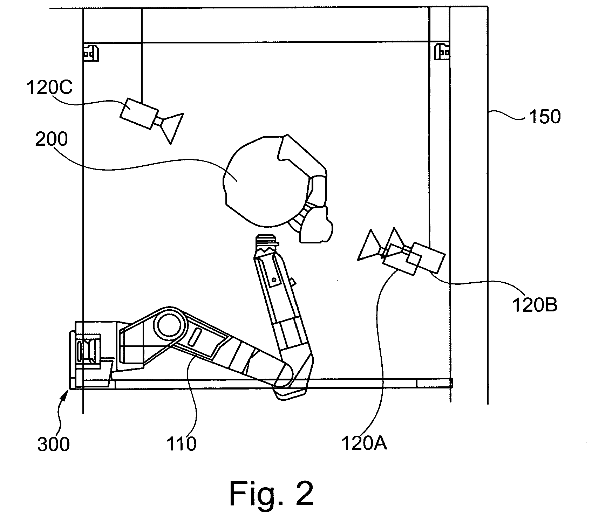

Fig. 2 zeigt einen Teil einer Testvorrichtung. In einem Rahmen 150 ist die Haltevorrichtung 110 an der Position 300 mit dem Rahmen 150 befestigt. An dem freien Ende der Haltevorrichtung 110, welche als sechsarmiger Roboterarm ausgeführt ist, ist eine Sichteinheit 200 in Form eines Helms angeordnet. Dieser Helm kann seine Ausrichtung so ändern, wie es durch beispielsweise durch einen Piloten eines Luftfahrzeugs während des Flugs erfolgt, wenn der Pilot seinen Kopf nach links/rechts dreht oder ihn nach oben hebt oder nach unten senkt oder den Kopf schräg hält. Diese Bewegungen entsprechen Rotationen um jeweils eine Rotationsachse.

Die Position und die Ausrichtung bzw. Blickrichtung des Helms wird durch drei optische Sensoren in Form von Kameras 120A, 120B, 120C erfasst. Deren Positionssignale werden wie im Zusammenhang mit Fig. 1 beschrieben durch die Testdurchführungseinheit 140 und die Steuereinheit 130 weiter verarbeitet.

## Patentansprüche

1. Testvorrichtung (100) zum Testen von Sichtsystemen, die Testvorrichtung aufweisend:
eine bewegliche Haltevorrichtung (110) zum Halten einer Sichteinheit (200) des Sichtsystems;
wobei die Haltevorrichtung (110) ausgeführt ist, eine Bewegung der Sichteinheit (200) mit einem rotatorischen Freiheitsgrad vorzunehmen
eine Positionserfassungseinheit (120A, 120B) zum Erfassen der Position und der Ausrichtung der Sichteinheit (200);
eine Testdurchführungseinheit (140), welche mit der Positionserfassungseinheit (120A, 120B) so gekoppelt ist, dass eine erfasste Position und Ausrichtung der Sichteinheit an die Testdurchführungseinheit (140) übertragen werden kann, wobei die Testdurchführungseinheit (140) weiterhin ausgeführt ist, ein Sichtfeld in Abhängigkeit der erfassten Position und Ausrichtung der Sichteinheit (200) zu ermitteln;
wobei die Testdurchführungseinheit (140) weiterhin ausgeführt ist, ein tatsächlich von der Sichteinheit dargestelltes Sichtfeld einzulesen und das ermittelte Sichtfeld mit dem eingelesenen Sichtfeld zu vergleichen;
**dadurch gekennzeichnet, dass** die Testdurchführungseinheit (140) ausgeführt ist, mit einer Steuereinheit (130) des Sichtsystems gekoppelt zu werden und ein von der Steuereinheit (130) in Abhängigkeit der Position und Ausrichtung der Sichteinheit an die Sichteinheit (200) übermitteltes Sichtfeld einzulesen, so dass das von der Testdurchführungseinheit (140) eingelesene Sichtfeld dem von der Steuereinheit (130) an die Sichteinheit (200) übermittelten Sichtfeld entspricht.

2. Testvorrichtung (100) nach Anspruch 1,
wobei die Testdurchführungseinheit (140) ausgeführt ist, eine von der Positionserfassungseinheit (120A, 120B) erfasste Position und Ausrichtung der Sichteinheit (200) zyklisch abzufragen.

3. Testvorrichtung (100) nach Anspruch 2,
wobei die Testdurchführungseinheit (140) ausgeführt ist das ermittelte Sichtfeld nach jedem Abfragen der erfassten Position und Ausrichtung erneut zu bestimmen und das von der Steuereinheit (130) übermittelte Sichtfeld erneut einzulesen und das ermittelte Sichtfeld mit dem eingelesenen Sichtfeld nach jedem Abfragen der erfassten Position und Ausrichtung abzugleichen.

4. Testvorrichtung (100) nach einem der vorhergehenden Ansprüche,
wobei die Haltevorrichtung (110) ausgeführt ist, eine Bewegung der Sichteinheit (200) mit drei rotatorischen Freiheitsgraden vorzunehmen.

5. Testvorrichtung (100) nach einem der vorhergehenden Ansprüche,
wobei die Haltevorrichtung (100) als steuerbarer Roboterarm ausgeführt ist.

6. Testvorrichtung (100) nach Anspruch 5,
wobei der Roboterarm sechs getrennt voneinander ansteuerbare Segmente aufweist und eine Positionierung der Sichteinheit entlang von drei translatorischen und drei rotatorischen Freiheitsgraden ermöglicht.

7. Testvorrichtung (100) nach einem der vorhergehenden Ansprüche,
wobei die Positionserfassungseinheit (120A, 120B) zumindest einen Sensor aufweist aus der Gruppe bestehend aus optischen Sensoren, Beschleunigungssensoren, Lagesensoren, Dehnungssensoren.

8. Testvorrichtung (100) nach einem der vorhergehenden Ansprüche,
wobei die Positionserfassungseinheit (120A, 120B) zwei optische Sensoren jeweils in Form einer Bildaufnahmeeinheit aufweist.

9. Verwendung einer Testvorrichtung (100) nach einem der vorhergehenden Ansprüche zum Testen von sichtfeldergänzenden Sichtsystemen (200, 130).

## Claims

1. A testing apparatus (100) for testing visual systems, the testing apparatus comprising:
a moveable holding device (110) for holding a viewing unit (200) of the visual system;
wherein the holding device (110) is configured to accomplish a movement of the viewing unit (200) with one rotational degree of freedom;
a position detection unit (120A, 120B) for detecting the position and the orientation of the viewing unit (200);
a test-conducting unit (140) which is coupled to the position detection unit (120A, 120B) such that a detected position and an orientation of the viewing unit can be transmitted to the test-conducting unit (140), wherein the test-conducting unit (140) is furthermore configured to determine a field of view depending on the detected position and orientation of the viewing unit (200);
wherein the test-conducting unit (140) is furthermore configured to read in a field of view actually shown by the viewing unit and to compare the determined field of view with the read in field of view;
**characterized in that** the test-conducting unit (140) is configured to be coupled with a control unit (130) of the visual system and to read in a field of view transmitted by the control unit (130) to the viewing unit (200) depending on the position and the orientation of the viewing unit, so that the field of view read in by the test-conducting unit (140) corresponds to the field of view transmitted by the control unit (130) to the viewing unit (200).

2. The testing apparatus (100) according to claim 1,
wherein the test-conducting unit (140) is configured to cyclically retrieve a position and orientation of the viewing unit (200) detected by the position detection unit (120A, 120B).

3. The testing apparatus according to claim 2,
wherein the test-conducting unit (140) is configured to, after each retrieval of the detected position and orientation of the viewing unit, re-determine the field of view, read-in the field of view transmitted by the control unit (130) and to compare the re-determined field of view with the read-in field of view after each retrieval.

4. The testing apparatus (100) according to any one of the preceding claims,
wherein the holding device (110) is configured to accomplish a movement of the viewing unit (20) with three rotational degrees of freedom.

5. The testing apparatus (100) according to any one of the preceding claims,
wherein the holding device (110) is structured as a controllable robot arm.

6. The testing apparatus (100) according to claim 5,
wherein the robot arm comprises six segments that are separately controllable from one another to enable a positioning of the viewing unit along three translational and three rotational degrees of freedom.

7. The testing apparatus (100) according to any one of the preceding claims,
wherein the position detection unit (120A, 120B) comprises at least one sensor of the group consisting of optical sensors, accelerometers, position sensors, and strain sensors.

8. The testing apparatus (100) according to any one of the preceding claims,
wherein the position detection unit (120A, 120B) comprises two optical sensors, each of which is designed as an image capturing unit.

9. Use of a testing apparatus (100) according to any one of the preceding claims for testing visual systems (200, 130) that are configured for supplementing a field of view.

## Revendications

1. Dispositif de test (100) destiné à tester des systèmes de vision, le dispositif de test présentant :
un dispositif mobile de support (110) destiné à supporter une unité de vision (200) du système de vision ;
dans lequel le dispositif de support (110) est réalisé pour procéder à un mouvement de l'unité de vision (200) avec un degré de liberté rotatoire ;
une unité de détection de position (120A, 120B) destinée à détecter la position et l'orientation de l'unité de vision (200) ;
une unité de réalisation de test (140), qui est couplée à l'unité de détection de position (120A, 120B) de manière à ce qu'une position et une orientation détectées de l'unité de vision puissent être transmises à l'unité de réalisation de test (140), dans lequel l'unité de réalisation de test (140) est en outre réalisée pour déterminer un champ de vision en fonction de la position et de l'orientation détectées de l'unité de vision (200) ;
dans lequel l'unité de réalisation de test (140) est en outre réalisée pour lire un champ de vision effectivement représenté par l'unité de vision et pour comparer le champ de vision déterminé avec le champ de vision lu ;
**caractérisé en ce que** l'unité de réalisation de test (140) est réalisée pour être couplée à une unité de commande (130) du système de vision et pour lire un champ de vision transmis par l'unité de commande (130) à l'unité de vision (200), en fonction de la position et de l'orientation de l'unité de vision, de sorte que le champ de vision lu par l'unité de réalisation de test (140) corresponde au champ de vision transmis à l'unité de vision (200) par l'unité de commande (130).

2. Dispositif de test (100) selon la revendication 1,
dans lequel l'unité de réalisation de test (140) est réalisée pour interroger cycliquement une position et une orientation de l'unité de vision (200), détectées par l'unité de détection de position (120A, 120B).

3. Dispositif de test (100) selon la revendication 2,
dans lequel l'unité de réalisation de test (140) est réalisée pour de nouveau déterminer le champ de vision détecté, après chaque interrogation de la position et de l'orientation détectées, et pour lire de nouveau le champ de vision transmis par l'unité de commande (130) et pour ajuster le champ de vision déterminé au champ de vision lu, après chaque interrogation de la position et de l'orientation détectées.

4. Dispositif de test (100) selon l'une quelconque des revendications précédentes, dans lequel le dispositif de support (110) est réalisé pour procéder à un mouvement de l'unité de vision (200) à l'aide de trois degrés de liberté rotatoires.

5. Dispositif de test (100) selon l'une quelconque des revendications précédentes,
dans lequel le dispositif de support (110) est réalisé comme bras de robot commandable.

6. Dispositif de test (100) selon la revendication 5,
dans lequel le bras de robot présente six segments commandables de manière séparée les uns des autres, et permet un positionnement de l'unité de vision selon de trois degrés de liberté translatoires et trois degrés de liberté rotatoires.

7. Dispositif de test (100) selon l'une quelconque des revendications précédentes,
dans lequel l'unité de détection de position (120A, 120B) présente au moins un capteur du groupe constitué de capteurs optiques, de capteurs d'accélération, de capteur de position, de capteurs de contrainte.

8. Dispositif de test (100) selon l'une quelconque des revendications précédentes,
dans lequel l'unité de détection de position (120A, 120B) présente deux capteurs optiques chacun sous forme d'une unité de prise de vues.

9. Utilisation d'un dispositif de test (100) selon l'une quelconque des revendications précédentes, destiné à tester des systèmes de vision (200, 130) complétant les champs de vision.
